# EUROPÄISCHE PATENTSCHRIFT

(11) **EP 2 973 947 B1**
(45) Veröffentlichungstag und Bekanntmachung des Hinweises auf die Patenterteilung: **17.05.2017**
(21) Anmeldenummer: 13758781.2
(22) Anmeldetag: 27.08.2013
(51) Int. Cl.: H02K 1/27, H02K 1/28

(54) **ELEKTRISCHE MASCHINE MIT EINEM FLUSSKONZENTIERENDEN PERMANENTMAGNETROTOR UND REDUZIERUNG DES AXIALEN STREUFLUSSES**
ELECTRIC MACHINE HAVING A FLUX CONCENTRATING PERMANENT MAGNET ROTOR AND REDUCTION OF AXIAL FLUX LEAKAGE
MACHINE ÉLECTRIQUE COMPRENANT UN ROTOR AUX AIMANTS PERMANENTS AGANCÉ CONCENTRATION DE FLUX ET UN REDUCTION DES FLUX PARASITE DANS LA DIRECTION AXIALE

(30) Priorität: 17.04.2013 EP 13164073
(43) Veröffentlichungstag der Anmeldung: 20.01.2016
(73) Patentinhaber: Siemens Aktiengesellschaft, 80333 München (DE)
(72) Erfinder: MADER, Daniel, 97616 Bad Neustadt a.d. Saale (DE); VOLLMER, Rolf, 36129 Gersfeld (DE)
(86) Internationale Anmeldenummer: PCT/EP2013/067660
(87) Internationale Veröffentlichungsnummer: WO 2014/169974

(56) Entgegenhaltungen:
- DE-A1-102012 107 610
- DE-T2- 68 906 910
- FR-A1- 2 519 483
- US-A1- 2009 026 867
- US-A1- 2012 181 880

## Beschreibung

Die vorliegende Erfindung betrifft eine elektrische Maschine,
- wobei die elektrische Maschine einen Stator und einen auf einer Rotorwelle angeordneten Rotor aufweist,
- wobei die Rotorwelle in Lagern drehbar gelagert ist, so dass der Rotor um eine Rotationsachse rotierbar ist,
- wobei der Stator sich in Richtung der Rotationsachse gesehen über einen Statorbereich erstreckt,
- wobei der Rotor in Richtung der Rotationsachse gesehen einen Mittelbereich und beidseitig an den Mittelbereich angrenzende Außenbereiche aufweist.

Eine derartige elektrische Maschine ist allgemein bekannt. Insbesondere ist eine derartige elektrische Maschine bekannt, bei welcher
- der Rotor eine Anzahl von tangential zur Rotationsachse magnetisierten Permanentmagneten trägt, die tangential um die Rotationsachse herum gesehen gleichmäßig verteilt sind,
- wobei tangential um die Rotationsachse herum gesehen zwischen den Permanentmagneten Flussführungselemente angeordnet sind, mittels derer von den Permanentmagneten ausgehende Magnetfelder radial zur Rotationsachse gesehen auf den Stator zu gelenkt werden,
- wobei die Flussführungselemente in Richtung der Rotationsachse gesehen aus einer Vielzahl von aufeinander gestapelten Blechen bestehen.

Mit elektrischen Maschinen der zuletzt beschriebenen Art ist eine relativ hohe Leistungsdichte erreichbar.

Aus der US 2012/0181880 A1 ist eine derartige elektrische Maschine bekannt, wobei aus der US 2012/0181880 A1 jedoch nicht eindeutig hervorgeht, dass die Flussführungselemente aus aufeinander gestapelten Blechen bestehen. Der DE 10 2012 107 610 A1 ist ein im wesentlichen gleich gelagerter Offenbarungsgehalts zu entnehmen.

Auch aus der DE 689 06 910 T2 ist eine derartige elektrische Maschine bekannt. Bei der DE 689 06 910 T2 weist weiterhin der Rotor Formschlusselemente auf, mittels derer auf die im Mittelbereich des Rotors angeordneten Bleche wirkende Zentrifugalkräfte in die in den Außenbereichen des Rotors angeordneten Bleche übertragen werden. Aus der DE 689 06 910 T2 geht jedoch nicht eindeutig hervor, dass die Permanentmagnete tangential zur Rotationsachse magnetisiert sind.

Die Aufgabe der vorliegenden Erfindung besteht darin, eine elektrische Maschine zu schaffen, bei welcher die Leistungsdichte noch weiter erhöht werden kann.

Die Aufgabe wird durch eine elektrische Maschine mit den Merkmalen des Anspruchs 1 gelöst. Vorteilhafte Ausgestaltungen der elektrischen Maschine sind Gegenstand der abhängigen Ansprüche 2 bis 12.

Erfindungsgemäß wird eine elektrische Maschine der eingangs genannten Art dadurch weitergebildet,
- dass der Mittelbereich in Richtung der Rotationsachse gesehen mit dem Statorbereich übereinstimmt,
- dass die Permanentmagnete in Richtung der Rotationsachse gesehen sowohl im Mittelbereich als auch in den Außenbereichen des Rotors angeordnet sind,
- dass die von den Permanentmagneten ausgehenden Magnetfelder mittels der Flussführungselemente parallel zur Rotationsachse gesehen in den Mittelbereich gelenkt werden,
- dass die Bleche in den Außenbereichen des Rotors kleiner als die Bleche im Mittelbereich des Rotors sind,
- dass die in den Außenbereichen des Rotors angeordneten Bleche radial zur Rotationsachse gesehen außen von einer Halteeinrichtung umgeben sind und
- dass der Rotor Formschlusselemente aufweist, mittels derer auf die im Mittelbereich des Rotors angeordneten Bleche wirkende Zentrifugalkräfte in die in den Außenbereichen des Rotors angeordneten Bleche übertragen werden.

Die Formschlusselemente können nach Bedarf ausgebildet sein. Beispielsweise können die Formschlusselemente in die Bleche eingebrachte lokale Formschlusselemente umfassen, mittels derer Zentrifugalkräfte jeweils zwischen unmittelbar aneinander angrenzenden Blechen übertragen werden. Eine mögliche Ausgestaltung derartiger lokaler Formschlusselemente sind in die Bleche eingebrachte Stanzpaketiernocken und hiermit korrespondierende, in die Bleche eingebrachte Ausnehmungen.

Alternativ oder zusätzlich zu den lokalen Formschlusselementen können die Formschlusselemente Stäbe umfassen, die sich in Richtung der Rotationsachse gesehen über den gesamten Rotor erstrecken und durch korrespondierende Ausnehmungen der Bleche geführt sind.

Falls die Stäbe vorhanden sind, weisen sie vorzugsweise radial zur Rotationsachse gesehen eine größere Erstreckung auf als tangential zur Rotationsachse gesehen. Sie können insbesondere in einer zur Rotationsachse orthogonalen Ebene gesehen einen rechteckigen Querschnitt aufweisen. Um eine möglichst gleichmäßige Kraftverteilung zu erreichen, kann zwischen den Stäben und den Blechen eine erste elastische Zwischenschicht angeordnet sein.

Alternativ oder zusätzlich zur ersten elastischen Zwischenschicht kann zwischen den Blechen und den Permanentmagneten eine zweite elastische Zwischenschicht angeordnet sein.

Vorzugsweise weisen die Bleche radial zur Rotationsachse gesehen innen einen Innenabschnitt und außen einen Außenabschnitt auf, wobei die Innenabschnitte in einer zur Rotationsachse orthogonalen Ebene gesehen kreissektorartig ausgebildet sind und die Außenabschnitte in der zur Rotationsachse orthogonalen Ebene gesehen kreisringsektorartig ausgebildet sind. Besonders bevorzugt ist in diesem Fall, dass tangential um die Rotationsachse herum gesehen die Innenabschnitte einen Innenwinkel und die Außenabschnitte einen Außenwinkel überdecken und der Außenwinkel größer als der Innenwinkel ist.

Die Halteeinrichtungen können insbesondere als ringförmige Hülsen oder als vorgespannte Bandagen ausgebildet sein.

Im Stator ist üblicherweise ein Statorwicklungssystem angeordnet. Das Statorwicklungssystem weist Wicklungsköpfe auf, die in Richtung der Rotationsachse gesehen beidseitig über den Stator hinausragen. Die Wicklungsköpfe weisen in Richtung der Rotationsachse gesehen eine Längserstreckung auf. Die Längserstreckung der Wicklungsköpfe stimmt vorzugsweise mit einer Längserstreckung der Außenbereiche des Rotors überein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1 und 2: Längsschnitte durch eine elektrische Maschine,
- FIG 3 und 4: Querschnitte durch den Rotor der elektrischen Maschine der FIG 1 und 2,
- FIG 5: eine mögliche Ausgestaltung eines Blechs,
- FIG 6: einen Längsschnitt durch zwei Bleche,
- FIG 7: eine weitere mögliche Ausgestaltung eines Blechs,
- FIG 8: einen Längsschnitt durch ein Blech und einen Stab und
- FIG 9: einen Längsschnitt durch den Rotor einer elektrischen Maschine.

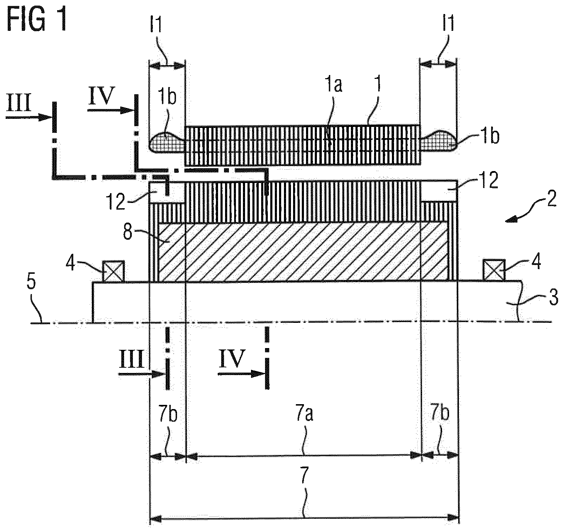

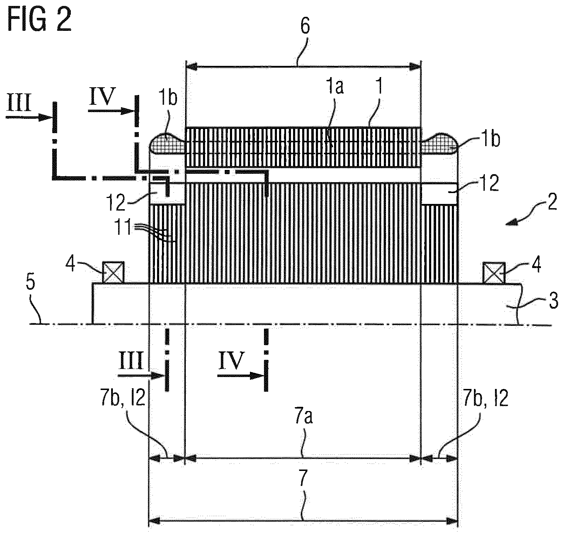

Gemäß den FIG 1 bis 4 weist eine elektrische Maschine einen Stator 1 und einen Rotor 2 auf. Der Rotor 2 ist auf einer Rotorwelle 3 angeordnet. Die Rotorwelle 3 ist in Lagern 4 drehbar gelagert. Die Rotorwelle 3 und mit ihr der Rotor 2 sind dadurch um eine Rotationsachse 5 rotierbar.

Soweit nachfolgend die Begriffe "axial", "radial" und "tangential" verwendet werden, sind sie stets auf die Rotationsachse 5 bezogen. "Axial" ist eine Richtung parallel zur Rotationsachse 5. "Radial" ist eine Richtung orthogonal zur Rotationsachse 5 auf die Rotationsachse 5 zu oder von ihr weg. "Tangential" ist eine Richtung, die sowohl zur Axialrichtung als auch zur Radialrichtung orthogonal ist. Tangential ist also eine Richtung, die in konstantem Radialabstand und bei konstanter Axialposition kreisförmig um die Rotationsachse 5 herum gerichtet ist.

Der Stator 1 erstreckt sich in Axialrichtung über einen Statorbereich 6. Im Stator 1 ist ein Statorwicklungssystem 1a angeordnet. Das Statorwicklungssystem 1a weist Wicklungsköpfe 1b auf, die in Axialrichtung gesehen beidseitig über den Stator 1 hinausragen. Die Wicklungsköpfe 1b weisen in Axialrichtung gesehen eine Längserstreckung 11 auf.

Der Rotor 2 erstreckt sich in Axialrichtung über einen Rotorbereich 7. Der Rotorbereich 7 weist in Axialrichtung einen Mittelbereich 7a und Außenbereiche 7b auf. Der Mittelbereich 7a stimmt in Axialrichtung gesehen mit dem Statorbereich 6 überein. Die Außenbereiche 7b grenzen in Axialrichtung beidseitig an den Mittelbereich 7a an. Der Mittelbereich 7a ist also zwischen den beiden Außenbereichen 7b angeordnet. Die Außenbereiche 7b weisen eine Längserstreckung 12 auf. Die Längserstreckung 12 der Außenbereiche 7b stimmt vorzugsweise mit der Längserstreckung 11 der Wicklungsköpfe 1b überein.

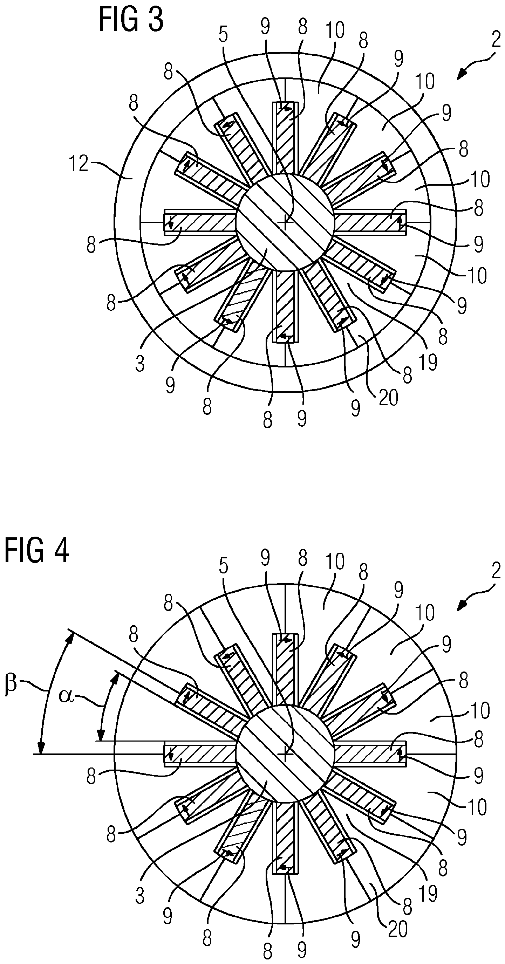

Der Rotor 2 trägt eine Anzahl von Permanentmagneten 8. Die Permanentmagnete 8 sind in Tangentialrichtung gleichmäßig um die Rotationsachse 5 herum verteilt. Sie sind, wie in den FIG 3 und 4 durch Pfeile 9 angedeutet ist, tangential zur Rotationsachse 5 magnetisiert. Die Permanentmagnete 8 sind (siehe FIG 1) in Axialrichtung gesehen sowohl im Mittelbereich 7a als auch in den Außenbereichen 7b des Rotors 2 angeordnet. Die in den FIG 3 und 4 dargestellte Anzahl an Permanentmagneten 8 ist jedoch rein beispielhaft.

Gemäß den FIG 3 und 4 sind in Tangentialrichtung gesehen zwischen den Permanentmagneten 8 Flussführungselemente 10 angeordnet. Mittels der Flussführungselemente 10 werden von den Permanentmagneten 8 ausgehende Magnetfelder B in Radialrichtung gesehen auf den Stator 1 zu gelenkt. In Axialrichtung gesehen werden die Magnetfelder B mittels der Flussführungselemente 10 in den Mittelbereich 7a gelenkt.

Die Flussführungselemente 10 bestehen in Axialrichtung gesehen aus einer Vielzahl von aufeinandergestapelten Blechen 11. Die Bleche 11 in den Außenbereichen 7b des Rotors 2 sind, wie sich einerseits aus FIG 1 und andererseits aus einem Vergleich der FIG 3 und 4 miteinander ergibt, kleiner als die Bleche 11 im Mittelbereich 7a des Rotors 2. Die in den Außenbereichen 7b des Rotors 2 angeordneten Bleche 11 sind in Radialrichtung gesehen außen von einer Halteeinrichtung 12 umgeben. Die Halteeinrichtungen 12 können beispielsweise als ringförmige vorgespannte Hülsen oder als vorgespannte Bandagen ausgebildet sein.

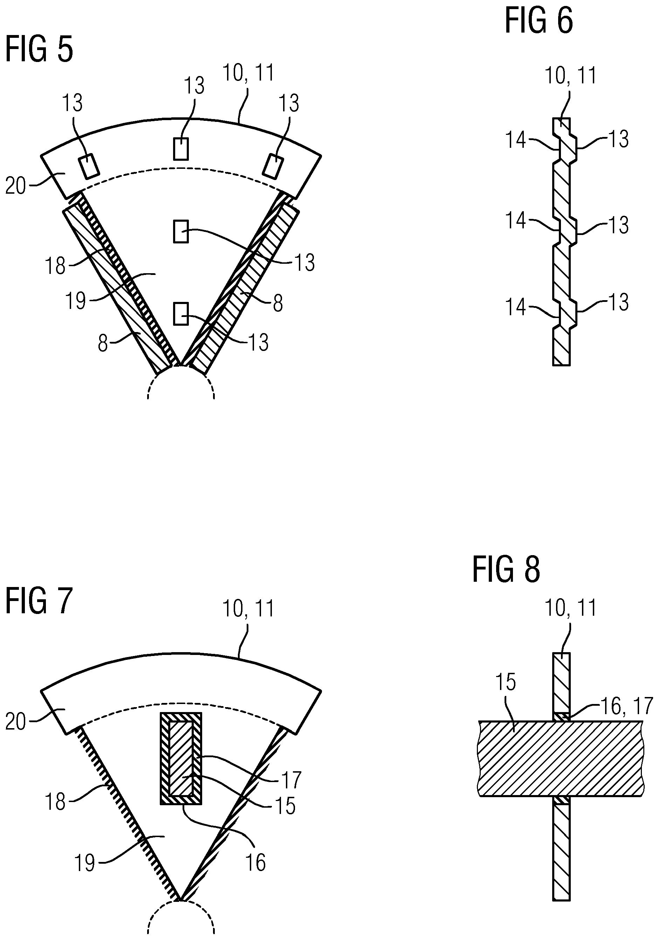

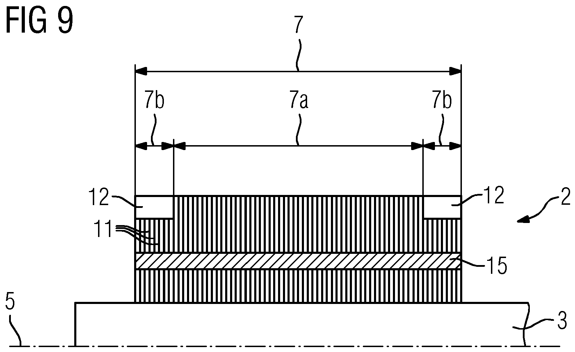

Der Rotor 2 weist Formschlusselemente 13 bis 16 auf. Mittels der Formschlusselemente 13 bis 16 werden Zentrifugalkräfte, welche auf die im Mittelbereich 7a des Rotors 2 angeordneten Bleche 11 wirken, in die in den Außenbereichen 7b des Rotors 2 angeordneten Bleche 11 übertragen. Mögliche Ausgestaltungen der Formschlusselemente 13 bis 16 werden nachfolgend in Verbindung mit den FIG 5 bis 9 näher erläutert.

Gemäß den FIG 5 und 6 können die Formschlusselemente 13 bis 16 in die Bleche 11 eingebrachte lokale Formschlusselemente 13, 14 umfassen. Mittels der lokalen Formschlusselemente 13, 14 werden Zentrifugalkräfte jeweils zwischen unmittelbar aneinander angrenzenden Blechen 11 übertragen. Insbesondere können die lokalen Formschlusselemente 13, 14 gemäß den FIG 5 und 6 als in die Bleche 11 eingebrachte Stanzpaketiernocken 13 und hiermit korrespondierende, in die Bleche 11 eingebrachte Ausnehmungen 14 ausgebildet sein. Die in den FIG 5 und 6 dargestellte Anzahl und Anordnung der lokalen Formschlusselemente 13, 14 ist rein beispielhaft.

Die lokalen Formschlusselemente 13, 14 wurden obenstehend in Verbindung mit Blechen 11 erläutert, die im Mittelbereich 7a des Rotors 2 angeordnet sind. Dieselben Ausgestaltungen sind in der Regel auch bei den Blechen 11 realisiert, die in den Außenbereichen 7b des Rotors 2 angeordnet sind.

Gemäß den FIG 7 bis 9 können global wirkende Formschlusselemente 15, 16 vorhanden sein. In diesem Fall umfassen die Formschlusselemente 13 bis 16 als global wirkende Formschlusselemente 15, 16 Stäbe 15. Die Stäbe 15 erstrecken sich in Axialrichtung über den gesamten Rotor 2. Sie sind durch korrespondierende Ausnehmungen 16 der Bleche 11 geführt.

Die global wirkenden Formschlusselemente 15, 16 sind gemäß den FIG 7 bis 9 alternativ zu den lokalen Formschlusselementen 13, 14 vorhanden. Es ist jedoch ebenso möglich, die Ausgestaltungen der FIG 5 und 6 einerseits sowie der FIG 7 bis 9 andererseits zusammen zu realisieren.

Die Stäbe 15 können als Rundstäbe oder als quadratische Stäbe ausgebildet sein. In diesem Fall weisen die Stäbe 15 in Radialrichtung die gleiche Erstreckung auf wie in Tangentialrichtung. Vorzugsweise jedoch weisen die Stäbe 15 in Radialrichtung eine größere Erstreckung auf als in Tangentialrichtung. Insbesondere können die Stäbe 15 in einer radial-tangential verlaufenden Ebene gesehen einen rechteckigen Querschnitt aufweisen, wobei die größere Seitenlänge des Rechtecks vorzugsweise radial orientiert ist.

Falls die Stäbe 15 und die Ausnehmungen 16 vorhanden sind, kann zwischen den Stäben 15 und den Blechen 11 zum Ausgleich von Toleranzen und zur Vergleichmäßigung eines Anpressdruckes eine elastische Zwischenschicht 17 vorhanden sein, nachfolgend als erste elastische Zwischenschicht 17 bezeichnet. Unabhängig davon, ob die Stäbe 15 und die Ausnehmungen 16 vorhanden sind, und unabhängig davon, ob gegebenenfalls die erste elastische Zwischenschicht 17 vorhanden ist, kann gemäß den FIG 5 und 7 zwischen den Blechen 11 und den Permanentmagneten 8 eine weitere elastische Zwischenschicht 18 vorhanden sein, zur Unterscheidung von der ersten elastischen Zwischenschicht 17 als zweite elastische Zwischenschicht 18 bezeichnet.

Die Bleche 11 weisen - siehe die FIG 3, 4, 5 und 7 - in Radialrichtung innen einen Innenabschnitt 19 und außen einen Außenabschnitt 20 auf. Die Innenabschnitte 19 sind in einer radial-tangential verlaufenden Ebene gesehen kreissektorartig ausgebildet. Sie überdecken in Tangentialrichtung einen Innenwinkel α. Die Außenabschnitte 20 sind in der radial-tangential verlaufenden Ebene gesehen kreisringsektorartig ausgebildet. Sie überdecken in Tangentialrichtung einen Außenwinkel β. Der Außenwinkel β ist größer als der Innenwinkel α.

Die erfindungsgemäße elektrische Maschine weist viele Vorteile auf. Insbesondere kann eine elektrische Maschine konstruiert werden, die einen mittels Permanentmagneten 8 erregten Rotor 2 aufweist, bei welchem der magnetische Fluss sowohl in Axialrichtung als auch in Tangentialrichtung konzentriert ist. Dennoch kann ein sehr kleiner Luftspalt zwischen dem Rotor 2 und dem Stator 1 realisiert werden, weil eine Halteeinrichtung im Luftspalt zwischen dem Rotor 2 und dem Stator 1 - also im Mittelbereich 7a des Rotors 2 - nicht erforderlich ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Maschine,
- wobei die elektrische Maschine einen Stator (1) und einen auf einer Rotorwelle (3) angeordneten Rotor (2) aufweist,
- wobei die Rotorwelle (3) in Lagern (4) drehbar gelagert ist, so dass der Rotor (2) um eine Rotationsachse (5) rotierbar ist,
- wobei der Stator (1) sich in Richtung der Rotationsachse (5) gesehen über einen Statorbereich (6) erstreckt,
- wobei der Rotor (2) in Richtung der Rotationsachse (5) gesehen einen Mittelbereich (7a) und beidseitig an den Mittelbereich (7a) angrenzende Außenbereiche (7b) aufweist,
- wobei der Mittelbereich (7a) in Richtung der Rotationsachse (5) gesehen mit dem Statorbereich (6) übereinstimmt,
- wobei der Rotor (2) eine Anzahl von tangential zur Rotationsachse (5) magnetisierten Permanentmagneten (8) trägt, die tangential um die Rotationsachse (5) herum gesehen gleichmäßig verteilt sind und in Richtung der Rotationsachse (5) gesehen sowohl im Mittelbereich (7a) als auch in den Außenbereichen (7b) des Rotors (2) angeordnet sind,
- wobei tangential um die Rotationsachse (5) herum gesehen zwischen den Permanentmagneten (8) Flussführungselemente (10) angeordnet sind, mittels derer von den Permanentmagneten (8) ausgehende Magnetfelder (B) radial zur Rotationsachse (5) gesehen auf den Stator (1) zu und parallel zur Rotationsachse (5) gesehen in den Mittelbereich (7a) gelenkt werden,
- wobei die Flussführungselemente (10) in Richtung der Rotationsachse (5) gesehen aus einer Vielzahl von aufeinander gestapelten Blechen (11) bestehen,
- wobei die Bleche (11) in den Außenbereichen (7b) des Rotors (2) kleiner als die Bleche (11) im Mittelbereich (7a) des Rotors (2) sind,
- wobei die in den Außenbereichen (7b) des Rotors (2) angeordneten Bleche (11) radial zur Rotationsachse (5) gesehen außen von einer Halteeinrichtung (12) umgeben sind,
- wobei der Rotor (2) Formschlusselemente (13 bis 16) aufweist, mittels derer auf die im Mittelbereich (7a) des Rotors (2) angeordneten Bleche (11) wirkende Zentrifugalkräfte in die in den Außenbereichen (7b) des Rotors (2) angeordneten Bleche (11) übertragen werden.

2. Elektrische Maschine nach Anspruch 1, **dadurch gekennzeichnet , dass** die Formschlusselemente (13 bis 16) in die Bleche (11) eingebrachte lokale Formschlusselemente (13, 14) umfassen, mittels derer Zentrifugalkräfte jeweils zwischen unmittelbar aneinander angrenzenden Blechen (11) übertragen werden.

3. Elektrische Maschine nach Anspruch 2, **dadurch gekennzeichnet , dass** die lokalen Formschlusselemente (13, 14) als in die Bleche (11) eingebrachte Stanzpaketiernocken (13) und hiermit korrespondierende, in die Bleche (11) eingebrachte Ausnehmungen (14) ausgebildet sind.

4. Elektrische Maschine nach Anspruch 1, 2 oder 3, **da** - **durch gekennzeichnet** , dass die Formschlusselemente (13 bis 16) Stäbe (15) umfassen, die sich in Richtung der Rotationsachse (5) gesehen über den gesamten Rotor (2) erstrecken und durch korrespondierende Ausnehmungen (16) der Bleche (11) geführt sind.

5. Elektrische Maschine nach Anspruch 4, **dadurch gekennzeichnet , dass** die Stäbe (15) radial zur Rotationsachse (5) gesehen eine größere Erstreckung aufweisen als tangential zur Rotationsachse (5) gesehen.

6. Elektrische Maschine nach Anspruch 4 oder 5, **da** - **durch gekennzeichnet**, dass die Stäbe (15) in einer zur Rotationsachse (5) orthogonalen Ebene gesehen einen rechteckigen Querschnitt aufweisen.

7. Elektrische Maschine nach Anspruch 4, 5 oder 6, **da** - **durch gekennzeichnet**, dass zwischen den Stäben (15) und den Blechen (11) eine erste elastische Zwischenschicht (17) angeordnet ist.

8. Elektrische Maschine nach einem der obigen Ansprüche, **dadurch gekennzeichnet, dass** zwischen den Blechen (11) und den Permanentmagneten (8) eine zweite elastische Zwischenschicht (18) angeordnet ist.

9. Elektrische Maschine nach einem der obigen Ansprüche, **dadurch gekennzeichnet, dass** die Bleche (11) radial zur Rotationsachse (5) gesehen innen einen Innenabschnitt (19) und außen einen Außenabschnitt (20) aufweisen, dass die Innenabschnitte (19) in einer zur Rotationsachse (5) orthogonalen Ebene gesehen kreissektorartig ausgebildet sind und dass die Außenabschnitte (20) in der zur Rotationsachse (5) orthogonalen Ebene gesehen kreisringsektorartig ausgebildet sind.

10. Elektrische Maschine nach Anspruch 9, **dadurch gekennzeichnet , dass** tangential um die Rotationsachse (5) herum gesehen die Innenabschnitte (19) einen Innenwinkel (α) und die Außenabschnitte (20) einen Außenwinkel (β) überdecken und dass der Außenwinkel (β) größer als der Innenwinkel (α) ist.

11. Elektrische Maschine nach einem der obigen Ansprüche, **dadurch gekennzeichnet, dass** die Halteeinrichtungen (12) als ringförmige Hülsen oder als vorgespannte Bandagen ausgebildet sind.

12. Elektrische Maschine nach einem der obigen Ansprüche, **dadurch gekennzeichnet, dass** im Stator (1) ein Statorwicklungssystem (1a) angeordnet ist, dass Wicklungsköpfe (1b) des Statorwicklungssystems (1a) in Richtung der Rotationsachse (5) gesehen beidseitig über den Stator (1) hinausragen, dass in Richtung der Rotationsachse (5) gesehen die Wicklungsköpfe (1b) eine Längserstreckung (11) aufweisen und dass die Längserstreckung (11) der Wicklungsköpfe (1b) mit einer Längserstreckung (12) der Außenbereiche (7b) des Rotors (2) übereinstimmt.

## Claims

1. Electrical machine,
- wherein the electrical machine has a stator (1) and a rotor (2) arranged on a rotor shaft (3),
- wherein the rotor shaft (3) is rotatably supported in bearings (4), so that the rotor (2) can be rotated about an axis of rotation (5),
- wherein the stator (1) extends over a stator region (6) viewed in the direction of the axis of rotation (5),
- wherein the rotor (2) has a central region (7a) and outer regions (7b) adjacent to the central region (7a) on both sides viewed in the direction of the axis of rotation (5),
- wherein the central region (7a) conforms with the stator region (6) viewed in the direction of the axis of rotation (5),
- wherein the rotor (2) bears a number of tangentially magnetised permanent magnets (8) in respect of the axis of rotation (5), which are tangentially evenly distributed viewed around the axis of rotation (5) and are arranged both in the central region (7a) and in the outer regions (7b) of the rotor (2) viewed in the direction of the axis of rotation (5),
- wherein flux guiding elements (10) are arranged tangentially between the permanent magnets (8) viewed around the axis of rotation (5), by means of which flux guiding elements (10) magnetic fields (B) coming from the permanent magnets (8) are directed radially toward the stator (1), viewed in respect of the axis of rotation (5) and in parallel into the central region (7a) viewed in respect of the axis of rotation (5),
- wherein the flux guiding elements (10), viewed in the direction of the axis of rotation (5), consist of a plurality of sheets (11) stacked one on the other,
- wherein the sheets (11) in the outer regions (7b) of the rotor (2) are smaller than the sheets (11) in the central region (7a) of the rotor (2),
- wherein the sheets (11) arranged in the outer regions (7b) of the rotor (2) are externally surrounded by a holding device (12) viewed radially in respect of the axis of rotation (5),
- wherein the rotor (2) has form-fitting elements (13 to 16), by means of which centrifugal forces acting on the sheets (11) arranged in the central region (7a) of the rotor (2) are transferred into the sheets (11) arranged in the outer regions (7b) of the rotor (2).

2. Electrical machine according to claim 1, **characterised in that** the form-fitting elements (13 to 16) comprise local form-fitting elements (13, 14) introduced into the sheets (11), by means of which centrifugal forces are transmitted in each case between directly adjacent sheets (11).

3. Electrical machine according to claim 2, **characterised in that** the local form-fitting elements (13, 14) are embodied as punch-bundled tappets (13) introduced into the sheets (11) and cutouts (14) corresponding hereto and introduced into the sheets (11).

4. Electrical machine according to claim 1, 2, or 3, **characterised in that** the form-fitting elements (13 to 16) comprise rods (15), which extend over the entire rotor (2) viewed in the direction of the axis of rotation (5) and are guided through corresponding cutouts (16) in the sheets (11).

5. Electrical machine according to claim 4, **characterised in that** the rods (15) have a larger extension viewed radially in respect of the axis of rotation (5) than viewed tangentially in respect of the axis of rotation (5).

6. Electrical machine according to claim 4 or 5, **characterised in that** the rods (15) have a rectangular cross-section viewed in a plane orthogonal to the axis of rotation (5).

7. Electrical machine according to claim 4, 5 or 6, **characterised in that** a first elastic intermediate layer (17) is arranged between rods (15) and the sheets (11).

8. Electrical machine according to one of the above claims, **characterised in that** a second elastic intermediate layer (18) is arranged between the sheets (11) and the permanent magnets (8).

9. Electrical machine according to one of the above claims, **characterised in that** the sheets (11) have internally an inner section (19) and externally an outer section (20) viewed radially in respect of the axis of rotation (5), that the inner sections (19) are embodied in the manner of a circular sector viewed in a plane orthogonal to the axis of rotation (5) and the outer sections (20) are embodied in the manner of a circular ring sector viewed in the plane orthogonal to the axis of rotation (5).

10. Electrical machine according to claim 9, **characterised in that** viewed tangentially around the axis of rotation (5), the inner sections (19) cover an inner angle (α) and the outer sections (20) cover an outer angle (β) and the outer angle (β) is greater than the inner angle (α).

11. Electrical machine according to one of the above claims, **characterised in that** the holding devices (12) are embodied as annular sleeves or as pre-stressed bandages.

12. Electrical machine according to one of the above claims, **characterised in that** a stator winding system (1a) is arranged in the stator (1), that winding heads (1b) of the stator winding system (1a) project over the stator (1) on both sides viewed in the direction of the axis of rotation (5), that the winding heads (1b) have a longitudinal extension (11) viewed in the direction of the axis of rotation (5) and that the longitudinal extension (11) of the winding heads (1b) conforms with a longitudinal extension (12) of the outer regions (7b) of the rotor (2).

## Revendications

1. Machine électrique,
- la machine électrique ayant un stator (1) et un rotor ( 2 ) monté sur un arbre ( 3 ) rotorique,
- l'arbre ( 3 ) rotorique étant monté tournant dans des paliers ( 4 ), de manière à ce que le rotor ( 2 ) puisse tourner autour d'un axe ( 5 ) de rotation,
- le stator ( 1 ) s'étendant, considéré dans la direction de l'axe ( 5 ) de rotation, sur une région ( 6 ) de stator,
- le rotor ( 2 ) ayant, considéré dans la direction de l'axe ( 5 ) de rotation, une région ( 7a ) médiane et des régions ( 7b ) extérieures, voisines des deux côtés de la région ( 7a ) médiane,
- la région ( 7a ) médiane coïncidant, considérée dans la direction de l'axe ( 5 ) de rotation, avec la région ( 6 ) de stator,
- le rotor ( 2 ) portant un certain nombre d'aimants ( 8 ) permanents, magnétisés tangentiellement à l'axe ( 5 ) de rotation, qui sont, considéré tangentiellement autour de l'axe ( 5 ) de rotation, répartis de manière uniforme et qui, considéré dans la direction de l'axe ( 5 ) de rotation, sont disposés à la fois dans la région ( 7a ) médiane et dans les régions ( 7b ) extérieures du rotor ( 2 ),
- dans lequel il est disposé, considéré tangentiellement autour de l'axe ( 5 ) de rotation, entre les aimants ( 8 ) permanents, des éléments ( 10 ) de guidage de flux, au moyen desquels des champs ( B ) magnétiques, provenant des aimants ( 8 ) permanents, sont déviés radialement, considéré par rapport à l'axe de rotation, sur le stator ( 1 ) et considéré parallèlement à l'axe ( 5 ) de rotation, dans la région ( 7a ) médiane,
- les éléments ( 10 ) de guidage de flux étant constitués, considéré dans la direction de l'axe ( 5 ) de rotation, d'une pluralité de tôles ( 11 ) empilées les unes sur les autres,
- les tôles ( 11 ), dans les régions ( 7b ) extérieures du rotor ( 2 ), étant plus petites que les tôles ( 11 ) dans la région ( 7a ) médiane du rotor ( 2 ),
- les tôles ( 11 ) disposées dans les région ( 7b ) extérieures du rotor ( 2 ), étant considéré radialement par rapport à l'axe ( 5 ) de rotation, entourées extérieurement d'un dispositif ( 12 ) de maintien,
- le rotor ( 2 ) ayant des éléments ( 13 à 16 ) de complémentarité de forme, au moyen desquels des forces centrifuges, s'appliquant aux tôles ( 11 ) disposées dans la région ( 7a ) médiane du rotor ( 2 ), sont transmises aux tôles ( 11 ) disposées dans les régions ( 7b ) extérieures du rotor ( 2 ).

2. Machine électrique suivant la revendication 1, **caractérisée en ce que** les éléments ( 13 à 16 ) de complémentarité de forme comprennent des éléments ( 13, 14 ) de complémentarité de forme locaux, introduits dans les tôles ( 11 ) et au moyen desquels les forces centrifuges sont transmises respectivement entre des tôles ( 11 ) directement voisines les unes des autres.

3. Machine électrique suivant la revendication 2, **caractérisée en ce que** les éléments ( 13, 14 ) de complémentarité de forme locaux sont constitués sous la forme d'ergots ( 13 ) estampés en rangées ménagées dans les tôles ( 11 ) et, ainsi, d'évidements ( 14 ) correspondants ménagés dans les tôles ( 11 ).

4. Machine électrique suivant la revendication 1, 2 ou 3, **caractérisée en ce que** les éléments ( 13 à 16 ) de complémentarité de forme comprennent des barreaux ( 15 ), qui, considéré dans la direction de l'axe ( 5 ) de rotation, s'étendent sur tout le rotor ( 2 ) et sont guidés par des évidements ( 16 ) correspondants des tôles ( 11 ).

5. Machine électrique suivant la revendication 4, **caractérisée en ce que** les barreaux ( 15 ) ont, considéré radialement par rapport à l'axe ( 5 ) de rotation, une étendue plus grande que considéré tangentiellement par rapport à l'axe ( 5 ) de rotation.

6. Machine électrique suivant la revendication 4 ou 5, **caractérisée en ce que** les barreaux ( 15 ) ont, considéré dans un plan orthogonale à l'axe ( 5 ) de rotation, une section transversale rectangulaire.

7. Machine électrique suivant la revendication 4, 5 ou 6, **caractérisée en ce qu'**une première couche ( 17 ), intermédiaire élastique, est disposée entre les barreaux ( 15 ) et les tôles ( 11 ).

8. Machine électrique suivant l'une des revendications précédentes, **caractérisée en ce qu'**une deuxième couche ( 18 ), intermédiaire élastique, est disposée entre les tôles ( 11 ) et les aimants ( 8 ) permanents.

9. Machine électrique suivant l'une des revendications précédentes, **caractérisée en ce que** les tôles ( 11 ) ont, considéré radialement par rapport à l'axe ( 5 ) de rotation, à l'intérieur, une partie ( 19 ) intérieure et à l'extérieur, une partie ( 20 ) extérieure, **en ce que** les parties ( 19 ) intérieures sont constituées, considéré dans un plan orthogonal à l'axe ( 5 ) de rotation, en étant de type en secteur de cercle et **en ce que** les parties ( 20 ) extérieures sont constituées, considéré dans un plan orthogonal à l'axe ( 5 ) de rotation, en étant de type en secteur d'anneau de cercle.

10. Machine électrique suivant la revendication 9, **caractérisée en ce que**, considéré tangentiellement autour de l'axe ( 5 ) de rotation, les parties ( 19 ) intérieures recouvrent un angle ( α ) intérieur et les parties ( 20 ) extérieures un angle ( ß ) extérieur et **en ce que** l'angle ( ß ) ) extérieur est plus grand que l'angle ( α ) intérieur.

11. Machine électrique suivant l'une des revendications précédentes, **caractérisée en ce que** les dispositifs ( 12 ) de maintien sont constitués sous la forme de manchons annulaires ou de bandages pré-tendus.

12. Machine électrique suivant l'une des revendications précédentes, **caractérisée en ce qu'**un système ( 1a ) d'enroulement statorique est disposé dans le stator ( 1 ), **en ce que** des têtes ( 1b ) d'enroulement du système ( 1a ) d'enroulement statorique dépassent, considéré dans la direction de l'axe ( 5 ) de rotation, des deux côtés du stator ( 1 ), **en ce que**, considéré dans la direction de l'axe ( 5 ) de rotation, les têtes ( 1b ) d'enroulement ont une étendue ( 11 ) en longueur et **en ce que** l'étendue ( 11 ) en longueur des têtes ( 1b ) d'enroulement coïncide avec une étendue ( 12 ) en longueur des régions ( 7b ) extérieures du rotor ( 2 ).
